# EUROPEAN PATENT SPECIFICATION

(11) **EP 4 096 386 B1**
(45) Date of publication and mention of the grant of the patent: **10.01.2024**
(21) Application number: 20811340.7
(22) Date of filing: 26.11.2020
(51) Int. Cl.: A01G 3/02

(54) **CUTTING TOOL**
SCHNEIDWERKZEUG
OUTIL DE DÉCOUPE

(30) Priority: 29.01.2020 EP 20154317
(43) Date of publication of application: 07.12.2022
(73) Proprietor: HUSQVARNA AB, 561 82 Huskvarna (SE)
(72) Inventor: RUDOLF, Peter, 89250 Senden (DE)
(74) Representative: Finkele, Rolf
(86) International application number: PCT/EP2020/083464
(87) International publication number: WO 2021/151549

(56) References cited:
- CN-A- 101 107 913
- US-A- 4 633 587

## Description

### TECHNICAL FIELD

The present disclosure relates to a cutting tool. More specifically, the present disclosure relates to the cutting tool which provides a compact and ergonomic profile for ease of handling of the cutting tool.

### BACKGROUND

Cutting tools such as secateurs, loppers, rakes, pliers are used for performing cutting action using one or more blades. Put simply, such tools provide increased mechanical assistance and ease of operation to a common user to conveniently perform operations such as with branches of varying dimensions. Further, the cutting tools provide benefits such as trapping bypass cutting or simply "bypass" allows pruning/cutting by the cutting tools while holding an object (i.e. branch) with one of the cutting edges.

However, there may be instances where working with the cutting tools become inconvenient for common users. For instance, packaging of components and wires such as torque or sensor wires within conventional cutting tools may lead to compromise with compactness and ergonomics of such cutting tools. Further, there are also concerns that a non-compact or non-uniform geometry of the cutting tool may become troublesome for the common users to handle during application.

An example of a cutting tool is provided in US patent application US 60,61,912 A (hereinafter referred to as '912 reference). The '912 reference provides a cutting tool. The cutting tool includes a pair of jaws pivoting about a pivot point. Each of the two jaws extent behind this pivot point into arm members that are partially covered by electrically isolating handle members. Wires are arranged with the cutting tool for a heating element attached to the jaws. The power supplied via a power supply cable to heat the jaws runs via the wires placed in a conduit inside one of the arm members into both of the jaws.

An example of a cutting tool is provided in European patent 3 262 923 (hereinafter referred to as '923 reference). The '923 reference provides a cutting tool. The cutting tool includes a first and a second cutting blades which can be moved relative to one another. The cutting blades each are associated with handles that house a wire to electrically connect the electric components within the handles, thus to allow a motor driven drive unit to assist the cutting. To guide the wire from the first handle into the second handle an extension housing is fixed with the first handle. This extension housing acts as a channel in witch the wire runs between the two handles.

Thus, there is a need of an improved cutting tool which allows ease of operation on account of a compact and ergonomic profile of the cutting tool. Further, it would be an added benefit if the cutting tool allows better packaging of components such as wires within the cutting tool.

### SUMMARY

In view of the above, it is an objective of the present invention to solve or at least reduce the drawbacks discussed above. The objective is at least partially achieved by a cutting tool of claim 1. The cutting tool includes a first blade and a second blade. The second blade is pivotally coupled to the first blade at a pivot point. The first blade and the second blade together perform a cutting action on an object placed between them. The cutting tool includes a first handle and a second handle. The first handle is operatively coupled to the first blade. The second handle is operatively coupled to the second blade. Further, a cable is disposed within at least one of the first handle and the second handle. The first handle is pivotally coupled to the second handle at the pivot point. Further the cable is fully enclosed by the first handle and the second handle. At least one of the first handle and the second handle comprises a channel, wherein the cable is at least partially disposed in the channel and wherein at least one of the first blade and the second blade delimits the channel. Thus, the present disclosure provides a simple, compact, and user-friendly cutting tool which allows improved packaging (say of the cable) without compromising with functional and applicational benefits of the cutting tool. As the cable is running through the handles and inside a channel that is located above or below a blade there is no need for an additional extension housing fixed to one of the handles to allow for the cable to switch between the two of them.

According to the present invention, the cable is a signal transferring cable. In particular the cable may be an electrical signal transferring cable or an optical signal transferring cable. Signal cables shall be undertstood as information or data transferring cables. Alternatively, the cable is an electrical energy transferring cable. It shall be appreciated that there are cables configured to transfer information or data as well as to transfer electrical energy.

According to an embodiment of the present invention, the first handle comprises at least one grip portion configured to be contact with a user's palm or fingers and a coupling portion configured to be coupled with the second handle and/or with the first blade and/or with the second blade. The channel may extend at least partially within the coupling portion. The channel further may extend at least partially within the coupling portion and at least partially within the grip portion. Advantageously, the cable may be disposed within the channel to be guided to a switch element disposed at or in the grip portion. Thus, an advantageous guidance of the cable within the handles is provided.

According to an embodiment of the present invention, the channel is formed by at least one, preferably linear, groove, in particular wherein the groove is provided on the coupling portion of the first handle, preferably wherein the groove at least partially extends transversely to a longitudinal extension of the first handle. Thus, the cable can be guided from one side of the first handle to the other side in order to enter the second handle. Further, if the cable is guided near the pivot point of the handles, the necessary length of the cable can be reduced, wherein the section of the cable that must be provided to follow the pivot movement of the handles can be small.

According to an embodiment of the present invention, the first handle comprises a first channel element at least partially forming the channel, wherein the cable passes from the interior of the second handle into the interior of the first handle through the first channel element, in particular wherein the first channel element is provided as a ring element or a tubular element, preferably integrally formed to the first handle. Thus, the channel can be formed in a simple way with the handle. Further, by providing a ring or tubular element, the cable may be protected from parts that move pivotally relative to each other and, thus, may be protected against damage by friction or entangling.

According to an embodiment of the present invention, the first channel element is at least partially, in particular fully, enclosed by the second handle. The interior of the second handle may be provided with a space in which the first channel element may be enclosed and can move during pivotal movement of the first handle relative to the second handle. This may enable movement of the cable without leaving the second handle during movement. The interior of the second handle may be provided with a path of movement of the first channel along which the first channel element can move during pivotal movement of the first handle relative to the second handle, while being fully enclosed during movement. Thus, the passage of the cable form first into second handle is provided with a protection against entangling of the cable between the two handles during movement.

According to an embodiment of the present invention, the channel section provided by the first channel element is arranged in an angle relative to the groove, in particular in an angle between 30° to 70°, preferably in an angle of 45°. Thus, it is ensured that the cable does not become subject to such bending that may result in breaking of the cable.

According to an embodiment of the present invention, the cable is disposed in the first and second handle, wherein all bendings of the cable within the first and second handle are bent with angles of less than 90°. Thus, it is ensured that the cable may not break due to too small bending radiuses, even in the case when the handles move pivotally such causing movement of the cable inside the handles.

According to an embodiment of the present invention, a space is provided within the second handle being arranged adjacent to the outlet of the first channel element into the second handle, wherein a section of the cable can move freely during pivotal movement of the first and second handle relative to each other. Thus, it is ensured that the cable moves freely during pivotal movement of the handles, while not applying force loads on fixed contacts to electric elements to which the cable is connected.

According to an embodiment of the present disclosure, at least of part of the at least one of the first handle and the second handle is extending in to the other one of the handles. By this the two handles allow the realization of an uninterrupted way of the cable from one handle into the other, that does pose any interface problem that risks the cable gets uncovered for a certain arrangement of the cutting tool.

According to an embodiment of the present disclosure, at least a part of the cable is present within a range from the pivot coupling of the first handle and the second handle. This helps in uniform distribution of the cable within the cutting tool.

According to an embodiment of the present disclosure, the range is around 10-15 mm from the pivot coupling. This helps in providing a compact and ergonomic profile to the cutting tool.

According to an embodiment of the present disclosure, the cable is a sensor cable. The cable transmits a signal that is representative of the force applied by the user and provides it to a drive unit (or any processor) to take the force into account to check if any supplemental force is required.

According to an embodiment of the present disclosure, the cable is at least partially disposed in a channel created by coupling of at least one of the first blade and the second blade and at least one of the first handle and the second handle. This protects the cable of damages introduced by external forces.

Other features and aspects of this invention will be apparent from the following description and the accompanying drawings.

### BRIEF DESCRIPTION OF THE DRAWINGS

The invention will be described in more detail with reference to the enclosed drawings, wherein:
FIG. 1 shows a perspective view of a cutting tool, in accordance with an aspect of the present disclosure;
FIG. 2 shows a perspective view of a cable between a first handle and a first blade of the cutting tool, in accordance with an aspect of the present disclosure;
FIG. 3 shows a perspective view of a drive unit within the cutting tool, in accordance with an aspect of the present disclosure;
FIG. 4 shows a perspective view of the cable within the first handle of the cutting tool, in accordance with another aspect of the present disclosure; and
FIG. 5 shows a perspective view of the cutting tool, wherein a part of the housing of the second blade is removed.

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete. For example, one or more aspects of the present invention may be utilized in other embodiments and even other types of structures and/or methods. In the drawings, like numbers refer to like elements.

### DESCRIPTION OF EMBODIMENTS

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

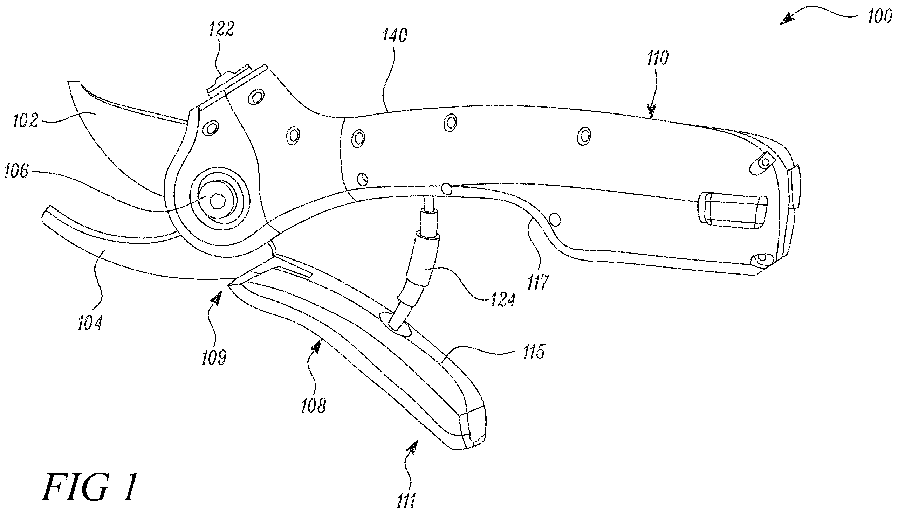

FIG. 1 illustrates a cutting tool 100. The cutting tool 100 of the present disclosure is illustrated as a secateur, however, the present disclosure may be readily applied to any cutting tool 100 such as, but not limited to, a lopper, shear, scissor etc. with two or more cutting edges. The cutting tool 100 includes one or more blades i.e. a first blade 102 and a second blade 104. The first blade 102 could be a replaceable blade. Further, the second blade 104 is pivotally coupled to the first blade 102. The first blade 102 and the second blade 104 together perform a cutting action on an object (generally a branch, not shown) placed between them.

As illustrated in FIG. 1, the cutting tool 100 includes one or more handles i.e. a first handle 108 and a second handle 110. The first handle 108 is operatively coupled with the first blade 102. Further, the first handle 108 defines a front portion 109 and a back portion 111. As illustrated in the present figure, the second handle 110 includes a front portion 140. During application of the cutting tool 100, profile, shape, dimensions of the front portion 140 have a bearing on ergonomics and handling of the cutting tool 100. The second handle 110 is operatively coupled with the second blade 104. The cutting tool 100 further includes a removable axis bolt and/or screw 106. The removable axis bolt and/or screw 106 is provided at the pivot point where the first blade 102 and the second blade 104 are pivotally coupled.

In some embodiments, the removable axis bolt and/or screw 106 may be any one or more of a coupling nut, a flange nut, a hex nut, a lock nut, a slotted nut, a square nut, a wheel nut and the like.

In closed position of the cutting tool 100, at least a part of the second handle 110 at least partially encloses the back portion 111 of the first handle 108. The first handle 108 and the second handle 110 have one or more sides 115, 117 respectively that come close to each other when closing the cutting tool 100. Moreover, the cutting tool 100 preferably has a spring 124 which allows coupling of the first handle 108 and the second handle 110. The spring 124 could be further connected through an adapter (not shown) to the first handle 108 and allows transmission of any supplemental force required to allow desired cutting action by the first handle 108 and the second handle 110. In some embodiments, the adapter helps to assemble and retain the first blade 102 within the cutting tool 100. The first blade 102 may then be replaced by sliding the first blade 102 out from the adapter.

In some embodiments, the one or more blades i.e. the first blade 102 and the second blade 104 may be one or more of a clip point blade, a drop point blade, a gut hook blade, a hawkbell blade, a needle point blade, a straight back blade, a sheepsfoot blade and a spear point blade.

In some embodiment, the one or more blades i.e. the first blade 102 and the second blade 104 may be made of steel or any other material as used or known in the art. Choice of the material for any of the first blade 102 and the second blade 104 will generally depend upon factors such as life, application, weight or other parameters related to the cutting tool 100. However, the present disclosure is not to be limited by the type of material of the first blade 102 and the second blade 104 in any manner.

During implementation, at least one of the first blade 102 and the second blade 104 may be a fixed blade while the other performs desired cutting action. Alternately or additionally, both the first blade 102 and the second blade 104 may be movable during the cutting action.

Advantageously, in accordance with an embodiment of the present disclosure, elastic, rounded design of the one or more sides 115, 117 of both the first handle 108 and the second handle 110 may allow to avoid an undesirable crushing, in particular a pinching of operator's or users hand, between the first handle 108 and the second handle 110, and the like.

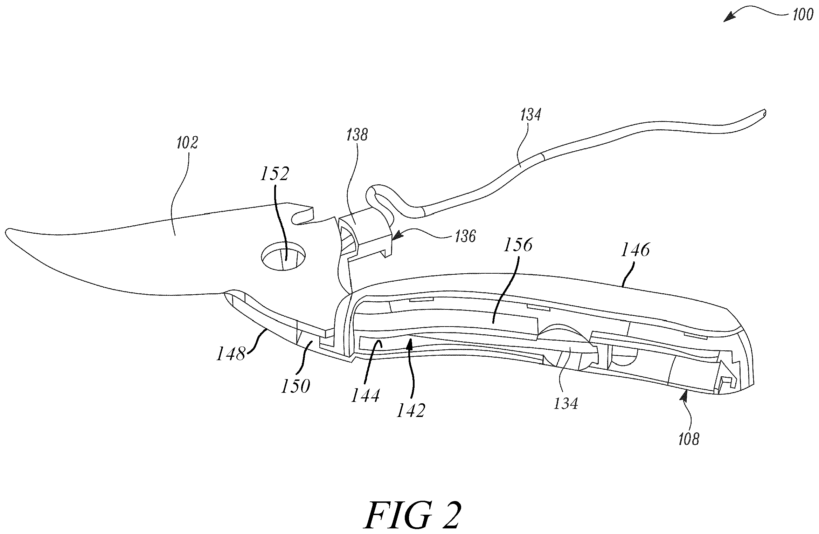

FIG. 2 illustrates the cutting tool 100 which has a cable 134 disposed within the first handle 108. The present disclosure illustrates the cable 134 disposed within the first handle 108 in some embodiments, however actual implementation of the present disclosure may have the cable 134 disposed in at least one of the first handle 108 and the second handle 110. The cable 134 is at least partially disposed in a groove 136 defined by at least one of the first handle 108 and the second handle 110 such that the cable 134 extends from the first handle 108 to the second handle 110. The first handle 108 is pivotally coupled to the second handle 110 at the pivot point and the cable 134 is fully enclosed by the first handle 108 and the second handle 110.

Referring to FIG. 2 shows the first handle 108 that is operatively coupled to the first blade 102. At least a part of the cable 134 is present within a range from the pivot coupling of the first handle 108 and the second handle 110. In the depicted embodiment the first blade 102 is located above a channel formed by a groove 150 provided by first handle 108. While with this embodiment the first blade 102 is forming the top of the channel it is well understood that the top of the channel could also be formed by the first handle 108 itself (or even by a separate element) oriented below the first blade 102.The range is around 10-15 mm, or any other range depending upon application needs and the like, from the pivot coupling. This helps in providing a compact, and ergonomic structural profile to the cutting tool 100, particularly around the front portion 140 of the first handle 108. The cable 134 is at least partially disposed in a first channel element 138 created by coupling of at least one of the first blade 102 and the second blade 104 and at least one of the first handle 108 and the second handle 110. More specifically, the cable 134 is running through the first channel element 138 between the first handle 108 and the first blade 102 specifically for passing from one handle into the other. The first handle 108 comprises a coupling portion 148 and a grip portion 146. The first channel element 138 and an adjacent groove 150 forms a first channel 138 extending in the coupling portion 148, wherein a second channel element 144 forms a second channel 142 extending inside of the grip portion 146. The cable 134 is disposed within the first and the second channel 136, 142. An opening 152 is provided for coupling the blades 102, 104 and the handles 108, 110.

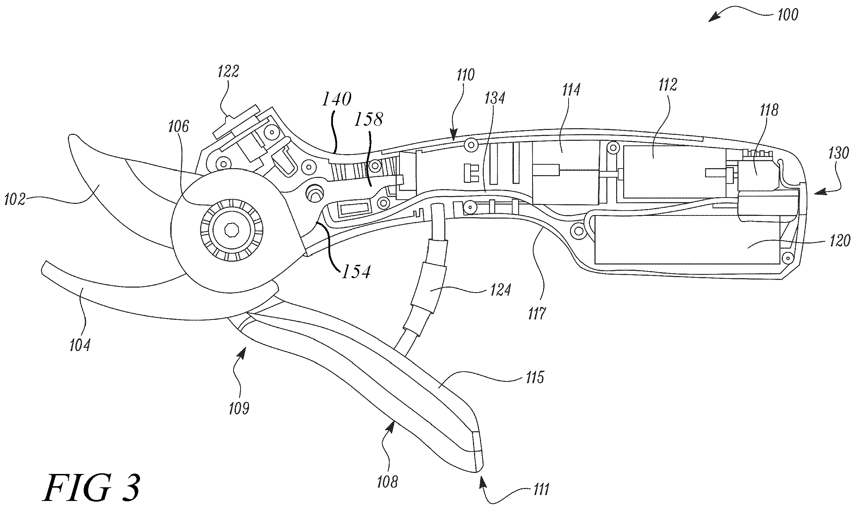

FIG. 3 illustrates the cutting tool 100 which includes a drive unit 130. The drive unit 130 includes a motor 112, a gearbox 114, a wind and a clutch. The drive unit 130 further includes a printed circuit board assembly (PCBA) 118. Moreover, the drive unit 130 includes a battery 120. The drive unit 130 is operatively coupled to at least one of the first blade 102 and the second blade 104. More specifically, the drive unit 130 is housed within the second handle 110. The battery 120 of the drive unit 130 is also housed within the second handle 110. This helps in reducing the dimensions and special footprint of the first handle 108. The drive unit 130 is configured to selectively provide a supplemental motor force to assist a movement of at least one of the first blade 102 and the second blade 104 to perform the cutting action.

In a preferred embodiment, all components of the drive unit 130 are housed in a single handle i.e. the second handle 110 as best illustrated in FIG. 3. This helps in reducing the thickness, dimensions, ergonomic profile or spatial footprint of the second handle 110, and the first handle 108. This even allows the combined profile of the second handle 110, and the first handle 108 to be realized as one part, particularly during closed state of the first handle 108.

In an embodiment, the cutting tool 100 includes a switch to activate or deactivate the drive unit 130. In the depicted embodiment this switch is realized in top of the cutting tool 100 as slider or trigger 122. On engaging, moving or pressing the slider or trigger 122 the drive unit 130 gets switched on and off and thus the cutting tool 100 becomes convenient and safe to handle by common users. The drive unit 130 may be deactivated for instances which may require to save/extend battery life or allow uninterrupted operation of the power-assisted cutting tool 100, such as for low battery conditions. In such instances of the deactivated drive unit 130, it could be possible that the motor 112 will remain in a disengaged/OFF state leading to a purely user-based cutting action by the cutting tool 100, without any supplemental motor force. In one embodiment the slider or trigger 122 might also look the cutting tool 100 in a closed status.

In some embodiments, the slider or trigger 122 may be a button, a knob, a single pole single throw switch, a single pole double throw switch, a double pole single throw switch, a double pole double throw switch, a push-button switch, a toggle switch, a limit switch, a float switch, and the like. Alternately or additionally, a button, a knob, or any other switching means as used or known in the relevant art may be present in place of the slider or trigger 122.

In some embodiments, boundary lines of both the first handle 108 and the second handle 110 may be parallel to each other. Alternately or additionally, the boundary lines of the one or more of handles i.e. the first handle 108 and the second handle 110 may be non-aligned with respect to each other.

In some embodiment, the battery 120 may be a primary battery, a secondary battery. For example, the battery 120 may be one or more of a lithium-ion, a nickel cadmium, a nickel-metal hydride, lead-acid.

Again, referring to FIGS. 2, 3, the cable 134 is running between the one or more of blades i.e. the first blade 102 and the second blade 104 and the one or more of handles i.e. the first handle 108 and the second handle 110. The cable 134 is connected to the drive unit 130. The cable 134 may be a sensor cable receiving signals from a force sensor that detects a torque between the one or more blades and the one or more handles, although other types, uses, applications of the cable 134 have been contemplated and are well within the scope of the present disclosure. In one embodiment the force sensor detects the force applied by the user which is further sent to a drive unit 130 to take the force into account. Further, the drive unit 130 may decide the supplemental force required, if any, based on the force applied. In some embodiments, the cable 134 may be running through the first handle 108. Some part of the cable 134 is even running through the second handle 110. The cable 134 passes through the first channel element 138 into the second handle 110 inside of which a space 154 is provided wherein the cable 134 may form a loop or a sling. This space 154 may be delimited by the second handle 110 itself and at least partially by a shaft 158 of the second blade 104.

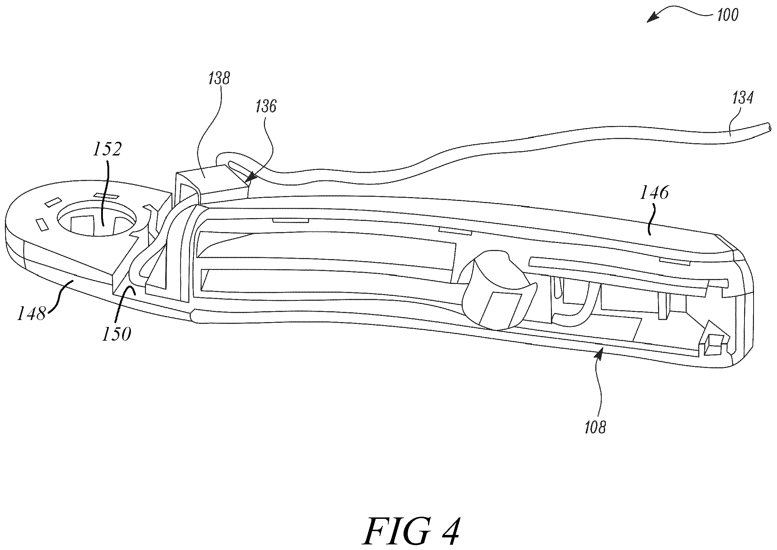

FIG. 4 illustrates the first handle 108 together with the cable 134. The first handle 108 has the first channel element 138 that extends into the second handle 110 in an assembled state of the cutting tool 100. The first channel element 138 includes the first channel 136. The cable 134 is running between the first blade 102 and the first handle 108. The first channel element 138 avoids need of additional geometry and/or substantial spacing between the first handle 108 and the second handle 110. The first channel 138 helps in reducing geometry of the front portion 140 as well of the second handle 110 and therefore making it possible to have substantial room for user engagement further into the direction of the pivot point or anywhere else on the first handle 108. In this way, the cutting tool 100 may be easily operated by the user, without being limited by any factor associated with the user (say size of hands of the user). The groove 150 may extend transversely relative to a longitudinal axis of the grip portion 146 and close to or adjacent the opening 152 of the coupling portion 148.

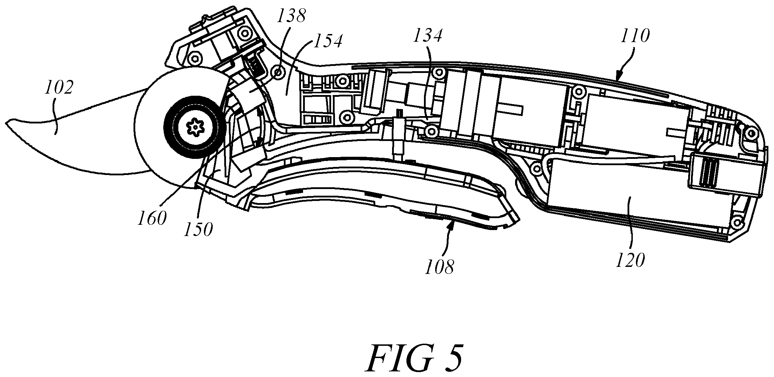

FIG. 5 illustrates the cutting tool 100, wherein a part of the second handle 110 is removed such that the interior of said handle is visible. The groove 150 and the first channel element 138 extend angularly relative to each other, e.g. in an angle of 45°. A path of movement 160 of the first channel element 138 is shown that is provided inside of the second handle 110 that allows the first channel element 138 to pivotally move within the second handle 110, when both handles 108, 110 are pivotally moved relative to each other. Further, it is shown the arrangement of first channel element 138, groove 150 and path 160 allows the cable to bend without being bent to small radii during movement of the cables.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- 100: Cutting Tool
- 102: First Blade
- 104: Second blade
- 106: Removable axis Bolt and/or Screw
- 108: First handle
- 109: Front Portion
- 110: Second handle
- 111: Back Portion
- 112: Motor
- 114: Gear Box
- 115: Inner Side
- 117: Inner Side
- 118: Printed Circuit Board Assembly (PCBA)
- 120: Battery
- 122: Slider or Trigger
- 130: Drive unit
- 134: CableCable
- 136: First channel
- 138: First channel element
- 140: Front Portion
- 142: Second channel
- 144: Second channel element
- 146: Grip portion
- 148: Coupling portion
- 150: Groove
- 152: Opening
- 154: Space
- 156: Shaft of first blade
- 158: Shaft of second blade
- 160: Path of movement of first channel element

## Claims

1. A cutting tool (100) comprising:
a first blade (102);
a second blade (104) pivotally coupled to the first blade (102) at a pivot point, wherein the first blade (102) and the second blade (104) together perform a cutting action on an object placed therebetween;
a first handle (108) operatively coupled to the first blade (102);
a second handle (110) operatively coupled to the second blade (104); wherein the first handle (108) is pivotally coupled to the second handle (110) at the pivot point;
a cable (134) disposed within at least one of the first handle (108) and the second handle (110); and
a drive unit (130) including a motor (112), a gearbox (114), a wind, a clutch, a printed circuit board assembly (PCBA) and a battery (120), wherein the drive unit (1130) operatively coupled to at least one of the first blade (102) and the second blade (104) and configured to selectively provide a supplemental motor force to assist a movement of at least one of the first blade (102) and the second blade (104) to perform the cutting action, wherein the cable (134) is connected to the drive unit (130),
**characterized in that**:
the cable (134) is a signal transferring cable or an electrical energy transferring cable;
the cable (134) is fully enclosed by the first handle (108) and the second handle (110), and
at least one of the first handle (108) and the second handle (110) comprises a channel (136, 142), wherein the cable (134) is at least partially disposed in the channel (136, 142) and wherein at least one of the first blade (102) and the second blade (104) delimits the channel (136, 142).

2. The cutting tool (100) of claim 1, wherein the cable (134) is an electrical signal transferring cable or an optical signal transferring cable.

3. The cutting tool (100) of any of claims 1 or 2, wherein the first handle (108) comprises at least one grip portion (146) configured to be contact with a user's palm or fingers and a coupling portion (148) configured to be coupled with the second handle (110) and/or with the first blade (102) and/or with the second blade (104), wherein the channel (136, 142) extends at least partially within the coupling portion (148), in particular wherein the channel (136, 142) extends at least partially within the coupling portion (148) and at least partially within the grip portion (146), preferably wherein the cable (134) is disposed within the channel (136, 142) to be guided to a switch element disposed at or in the grip portion (146).

4. The cutting tool (100) of any of claims 1 to 3, wherein the channel (136, 142) is formed by at least one, preferably linear, groove (150), in particular wherein the groove (150) is provided on the coupling portion (148) of the first handle (108), preferably wherein the groove (150) at least partially extends transversely to a longitudinal extension of the first handle (108).

5. The cutting tool (100) of any of claims 1 to 4, wherein the first handle (108) comprises a first channel element (138) at least partially forming the channel (136, 142), wherein the cable (134) passes from the interior of the second handle (110) into the interior of the first handle (108) through the first channel element (138), in particular wherein the first channel element (138) is provided as a ring element or a tubular element, preferably integrally formed to the first handle (108).

6. The cutting tool (100) of claim 5, wherein the first channel element (138) is at least partially, in particular fully, enclosed by the second handle (110), in particular wherein the interior of the second handle (110) is provided with a space (154) in which the first channel element (138) is enclosed and can move during pivotal movement of the first handle (108) relative to the second handle (110), in particular without leaving the second handle (110) during movement, preferably wherein the interior of the second handle (110) is provided with a path (160) of movement of the first channel along which the first channel element (138) moves during pivotal movement of the first handle (108) relative to the second handle (110), while being fully enclosed during movement.

7. The cutting tool (100) of any of claims 5 or 6, wherein the channel section provided by the first channel element (138) is arranged in an angle relative to the groove (150), in particular in an angle between 30° to 70°, preferably in an angle of 45°.

8. The cutting tool (100) of any of the claims 1 to 7, wherein the cable (134) is disposed in the first and second handle (108, 110), wherein all bendings of the cable (134) within the first and second handle (108, 110) are bent with angles of less than 90°.

9. The cutting tool (100) of claim 8, wherein a space (154) is provided within the second handle (110) being arranged adjacent to the outlet of the first channel element (138) into the second handle (110), wherein a section of the cable (134) can move freely during pivotal movement of the first and second handle (108, 110) relative to each other.

10. The cutting tool (100) of any of claims 1 to 9, wherein at least of part of the at least one of the first handle (108) and the second handle (110) is extending in to the other one of the handles (108, 110).

11. The cutting tool (100) of any of claims 1 to 10, wherein at least a part of the cable(134) is present within a range from the pivot coupling of the first handle (108) and the second handle (110).

12. The cutting tool (100) of claim 11, wherein the range is around 10-15 mm from the pivot coupling.

13. The cutting tool (100) of any of claims 1 to 12, wherein the cable (134) is a sensor signal cable (134).

14. The cutting tool (100) of claim 1, wherein the channel (136) is created by coupling of at least one of the first blade (102) and the second blade (104) and at least one of the first handle (108) and the second handle (110).

## Patentansprüche

1. Schneidwerkzeug (100), umfassend:
eine erste Klinge (102);
eine zweite Klinge (104), die mit der ersten Klinge (102) an einem Schwenkpunkt schwenkbar gekoppelt ist, wobei die erste Klinge (102) und die zweite Klinge (104) zusammen eine Schneidaktion an einem Objekt, das dazwischen platziert ist, durchführen;
einen ersten Griff (108), der mit der ersten Klinge (102) wirkgekoppelt ist;
einen zweiten Griff (110), der mit der zweiten Klinge (104) wirkgekoppelt ist; wobei
der erste Griff (108) mit dem zweiten Griff (110) an dem Schwenkpunkt schwenkbar gekoppelt ist;
ein Kabel (134), das innerhalb mindestens einem von dem ersten Griff (108) und dem zweiten Griff (110) angeordnet ist;
und
eine Antriebseinheit (130), einschließlich eines Motors (112), eines Getriebes (114), einer Wicklung, einer Kupplung, einer Leiterplattenbaugruppe (PCBA) und einer Batterie (120), wobei die Antriebseinheit (1130) mit mindestens einer von der ersten Klinge (102) und der zweiten Klinge (104) wirkgekoppelt und konfiguriert, um eine zusätzliche Motorkraft selektiv bereitzustellen, um eine Bewegung mindestens einer von der ersten Klinge (102) und der zweiten Klinge (104) zu unterstützen, um die Schneidaktion durchzuführen, wobei das Kabel (134) mit der Antriebseinheit (130) verbunden ist,
**dadurch gekennzeichnet, dass:**
das Kabel (134) ein Signalübertragungskabel oder ein Übertragungskabel einer elektrischen Energie ist;
das Kabel (134) durch den ersten Griff (108) und den zweiten Griff (110) vollständig umschlossen ist und
mindestens einer des ersten Griffs (108) und des zweiten Griffs (110) einen Kanal (136, 142) umfasst, wobei das Kabel (134) mindestens teilweise in dem Kanal (136, 142) angeordnet ist und wobei mindestens eine der ersten Klinge (102) und der zweiten Klinge (104) den Kanal (136, 142) begrenzt.

2. Schneidwerkzeug (100) nach Anspruch 1, wobei das Kabel (134) ein Übertragungskabel eines elektrischen Signals oder ein Übertragungskabel eines optischen Signals ist.

3. Schneidwerkzeug (100) nach einem der Ansprüche 1 oder 2, wobei der erste Griff (108) mindestens einen Greifabschnitt (146), der konfiguriert ist, um mit einer Handfläche oder Fingern eines Benutzers Berührung zu sein, und einen Kopplungsabschnitt (148) umfasst, der konfiguriert ist, um mit dem zweiten Griff (110) und/oder mit der ersten Klinge (102) und/oder mit der zweiten Klinge (104) gekoppelt zu werden, wobei sich der Kanal (136, 142) mindestens teilweise innerhalb des Kopplungsabschnitts (148) erstreckt, insbesondere wobei sich der Kanal (136, 142) mindestens teilweise innerhalb des Kopplungsabschnitts (148) und mindestens teilweise innerhalb des Greifabschnitts (146) erstreckt, vorzugsweise wobei das Kabel (134) innerhalb des Kanals (136, 142) angeordnet ist, um zu einem Schaltelement, das an oder in dem Greifabschnitt (146) angeordnet ist, geführt zu werden.

4. Schneidwerkzeug (100) nach einem der Ansprüche 1 bis 3, wobei der Kanal (136, 142) durch mindestens eine, vorzugsweise lineare, Nut (150) ausgebildet ist, insbesondere wobei die Nut (150) an dem Kopplungsabschnitt (148) des ersten Griffs (108) bereitgestellt ist, vorzugsweise wobei sich die Nut (150) mindestens teilweise quer zu einer Längserstreckung des ersten Griffs (108) erstreckt.

5. Schneidwerkzeug (100) nach einem der Ansprüche 1 bis 4, wobei der erste Griff (108) ein erstes Kanalelement (138), das den Kanal (136, 142) mindestens teilweise ausbildet, umfasst, wobei das Kabel (134) von dem Inneren des zweiten Griffs (110) in das Innere des ersten Griffs (108) über das erste Kanalelement (138) führt, insbesondere wobei das erste Kanalelement (138) als ein Ringelement oder ein röhrenförmiges Element bereitgestellt ist, vorzugsweise das mit dem ersten Griff (108) einstückig ausgebildet ist.

6. Schneidwerkzeug (100) nach Anspruch 5, wobei das erste Kanalelement (138) durch den zweiten Griff (110) mindestens teilweise, insbesondere vollständig, umschlossen ist, insbesondere wobei das Innere des zweiten Griffs (110) mit einem Raum (154) versehen ist, in dem das erste Kanalelement (138) umschlossen ist und sich bei einer Schwenkbewegung des ersten Griffs (108) relativ zu dem zweiten Griff (110) bewegen kann, insbesondere ohne den zweiten Griff (110) bei einer Bewegung zu verlassen, vorzugsweise wobei das Innere des zweiten Griffs (110) mit einem Pfad (160) der Bewegung des ersten Kanals versehen ist, entlang dem sich das erste Kanalelement (138) bei der Schwenkbewegung des ersten Griffs (108) relativ zu dem zweiten Griff (110) bewegt, während es bei der Bewegung vollständig umschlossen ist.

7. Schneidwerkzeug (100) nach einem der Ansprüche 5 oder 6, wobei die Kanalsektion, die durch das erste Kanalelement (138) bereitgestellt ist, in einem Winkel relativ zu der Nut (150), insbesondere in einem Winkel zwischen 30° bis 70°, vorzugsweise in einem Winkel von 45°, eingerichtet ist.

8. Schneidwerkzeug (100) nach einem der Ansprüche 1 bis 7, wobei das Kabel (134) in dem ersten und dem zweiten Griff (108, 110) angeordnet ist, wobei alle Biegungen des Kabels (134) innerhalb des ersten und des zweiten Griffs (108, 110) mit Winkeln von weniger als 90° gebogen sind.

9. Schneidwerkzeug (100) nach Anspruch 8, wobei ein Raum (154) innerhalb des zweiten Griffs (110) bereitgestellt ist, der angrenzend an den Auslass des ersten Kanalelements (138) in den zweiten Griff (110) eingerichtet ist, wobei sich eine Sektion des Kabels (134) bei der Schwenkbewegung des ersten und des zweiten Griffs (108, 110) relativ zueinander frei bewegen kann.

10. Schneidwerkzeug (100) nach einem der Ansprüche 1 bis 9, wobei sich mindestens ein Teil des ersten Griffs (108) und des zweiten Griffs (110) in den anderen der Griffe (108, 110) erstreckt.

11. Schneidwerkzeug (100) nach einem der Ansprüche 1 bis 10, wobei mindestens ein Teil des Kabels (134) innerhalb eines Bereichs von der Schwenkkopplung des ersten Griffs (108) und des zweiten Griffs (110) vorhanden ist.

12. Schneidwerkzeug (100) nach Anspruch 11, wobei der Bereich etwa 10 bis 15 mm von der Schwenkkopplung ist.

13. Schneidwerkzeug (100) nach einem der Ansprüche 1 bis 12, wobei das Kabel (134) ein Sensorsignalkabel (134) ist.

14. Schneidwerkzeug (100) nach Anspruch 1, wobei der Kanal (136) durch Koppeln mindestens einer von der ersten Klinge (102) und der zweiten Klinge (104) und mindestens einem von dem ersten Griff (108) und dem zweiten Griff (110) erzeugt wird.

## Revendications

1. Outil de coupe (100) comprenant :
une première lame (102) ;
une seconde lame (104) accouplée de manière pivotante à la première lame (102) au niveau d'un point de pivot, dans lequel la première lame (102) et la seconde lame (104) effectuent ensemble une action de coupe sur un objet placé entre elles ;
une première poignée (108) accouplée fonctionnellement à la première lame (102) ;
une seconde poignée (110) accouplée fonctionnellement à la seconde lame (104) ; dans lequel la première poignée (108) est accouplée de manière pivotante à la seconde poignée (110) au niveau du point de pivot ;
un câble (134) disposé à l'intérieur d'au moins une poignée parmi la première poignée (108) et la seconde poignée (110) ;
et
une unité d'entraînement (130) comportant un moteur (112), une boîte de vitesses (114), un enroulement, un embrayage, un ensemble carte de circuit imprimé (PCBA) et une batterie (120), dans lequel l'unité d'entraînement (1130) accouplée fonctionnellement à au moins une lame parmi la première lame (102) et la seconde lame (104) et configurée pour fournir sélectivement une force de moteur supplémentaire pour aider un mouvement d'au moins une lame parmi la première lame (102) et la seconde lame (104) afin de mettre en oeuvre l'action de coupe, dans lequel le câble (134) est relié à l'unité d'entraînement (130),
**caractérisé en ce que** :
le câble (134) est un câble de transfert de signal ou un câble de transfert d'énergie électrique ;
le câble (134) est entièrement enfermé par la première poignée (108) et la seconde poignée (110), et
au moins une poignée parmi la première poignée (108) et la seconde poignée (110) comprend un canal (136, 142), dans lequel le câble (134) est au moins partiellement disposé dans le canal (136, 142) et dans lequel au moins une lame parmi la première lame (102) et la seconde lame (104) délimite le canal (136, 142).

2. Outil de coupe (100) selon la revendication 1, dans lequel le câble (134) est un câble de transfert de signal électrique ou un câble de transfert de signal optique.

3. Outil de coupe (100) selon l'une quelconque des revendications 1 ou 2, dans lequel la première poignée (108) comprend au moins une partie de préhension (146) conçue pour être en contact avec la paume ou les doigts d'un utilisateur et une partie d'accouplement (148) conçue pour être accouplée à la seconde poignée (110) et/ou à la première lame (102) et/ou à la seconde lame (104), dans lequel le canal (136, 142) s'étend au moins partiellement à l'intérieur de la partie d'accouplement (148), en particulier dans lequel le canal (136, 142) s'étend au moins partiellement à l'intérieur de la partie d'accouplement (148) et au moins partiellement à l'intérieur de la partie de préhension (146), de préférence dans lequel le câble (134) est disposé à l'intérieur du canal (136, 142) pour être guidé vers un élément commutateur disposé au niveau de ou dans la partie de préhension (146).

4. Outil de coupe (100) selon l'une quelconque des revendications 1 à 3, dans lequel le canal (136, 142) est formé par au moins une rainure (150), de préférence linéaire, en particulier dans lequel la rainure (150) est prévue sur la partie d'accouplement (148) de la première poignée (108), de préférence dans lequel la rainure (150) s'étend au moins partiellement transversalement à une extension longitudinale de la première poignée (108).

5. Outil de coupe (100) selon l'une quelconque des revendications 1 à 4, dans lequel la première poignée (108) comprend un premier élément de canal (138) formant au moins partiellement le canal (136, 142), dans lequel le câble (134) passe de l'intérieur de la seconde poignée (110) à l'intérieur de la première poignée (108) à travers le premier élément de canal (138), en particulier dans lequel le premier élément de canal (138) est prévu en tant qu'élément annulaire ou élément tubulaire, de préférence formé d'un seul tenant avec la première poignée (108).

6. Outil de coupe (100) selon la revendication 5, dans lequel le premier élément de canal (138) est au moins partiellement, en particulier complètement, enfermé par la seconde poignée (110), en particulier dans lequel l'intérieur de la seconde poignée (110) est pourvu d'un espace (154) dans lequel le premier élément de canal (138) est enfermé et peut se déplacer pendant un mouvement pivotant de la première poignée (108) par rapport à la seconde poignée (110), en particulier sans sortir de la seconde poignée (110) pendant le mouvement, de préférence dans lequel l'intérieur de la seconde poignée (110) est pourvu d'un trajet (160) de mouvement du premier canal le long duquel le premier élément de canal (138) se déplace pendant un mouvement pivotant de la première poignée (108) par rapport à la seconde poignée (110), tout en étant complètement enfermé pendant le mouvement.

7. Outil de coupe (100) selon l'une quelconque des revendications 5 ou 6, dans lequel la section de canal fournie par le premier élément de canal (138) est agencée selon un angle par rapport à la rainure (150), en particulier selon un angle compris entre 30° et 70°, de préférence selon un angle de 45°.

8. Outil de coupe (100) selon l'une quelconque des revendications 1 à 7, dans lequel le câble (134) est disposé dans la première et la seconde poignée (108, 110), dans lequel toutes les flexions du câble (134) à l'intérieur de la première et de la seconde poignée (108, 110) sont courbées avec des angles inférieurs à 90°.

9. Outil de coupe (100) selon la revendication 8, dans lequel un espace (154) est prévu à l'intérieur de la seconde poignée (110), agencé adjacent à la sortie du premier élément de canal (138) dans la seconde poignée (110), dans lequel une section du câble (134) peut se déplacer librement pendant un mouvement pivotant de la première et de la seconde poignée (108, 110) l'une par rapport à l'autre.

10. Outil de coupe (100) selon l'une quelconque des revendications 1 à 9, dans lequel au moins une partie de l'au moins une poignée parmi la première poignée (108) et la seconde poignée (110) s'étend dans l'autre poignée des poignées (108, 110).

11. Outil de coupe (100) selon l'une quelconque des revendications 1 à 10, dans lequel au moins une partie du câble (134) est présente au sein d'une plage à partir de l'accouplement de pivot de la première poignée (108) et de la seconde poignée (110).

12. Outil de coupe (100) selon la revendication 11, dans lequel la plage est d'environ 10 à 15 mm à partir de l'accouplement de pivot.

13. Outil de coupe (100) selon l'une quelconque des revendications 1 à 12, dans lequel le câble (134) est un câble de signal de capteur (134).

14. Outil de coupe (100) selon la revendication 1, dans lequel le canal (136) est créé par accouplement d'au moins une lame parmi la première lame (102) et la seconde lame (104) et d'au moins une poignée parmi la première poignée (108) et la seconde poignée (110).
